# EUROPÄISCHE PATENTSCHRIFT

(11) **EP 0 575 369 B1**
(45) Veröffentlichungstag und Bekanntmachung des Hinweises auf die Patenterteilung: **30.07.1997**
(21) Anmeldenummer: 92905519.2
(22) Anmeldetag: 27.02.1992
(51) Int. Cl.: H04L 12/16, H04Q 3/42

(54) **DIGITALES KOMMUNIKATIONSSYSTEM MIT VERMITTLUNGSTECHNISCHEN SERVERN**
DIGITAL COMMUNICATION SYSTEM WITH TRANSMISSION SERVERS
SYSTEME DE COMMUNICATION NUMERIQUE AVEC SERVEURS DE TRANSMISSION

(30) Priorität: 12.03.1991 DE 4107897; 01.07.1991 CH 1939/91
(43) Veröffentlichungstag der Anmeldung: 29.12.1993
(73) Patentinhaber: SIEMENS AKTIENGESELLSCHAFT, 80333 München (DE)
(72) Erfinder: JAHN, Alfred, Dipl.-Ing.(FH), D-81373 München (DE); KREMER, Theodor, Dipl.-Ing., CH-8052 Zürich (CH); WEISIGK, Günter, Dipl.-Ing., CH-8903 Birmernsdorf-Zürich (CH); RIPPSTEIN, Eugen, CH-8904 Aosch (CH)
(86) Internationale Anmeldenummer: EP9200418
(87) Internationale Veröffentlichungsnummer: WO9217013

(56) Entgegenhaltungen:
- EP-A- 0 264 006
- DE-A- 3 625 857
- Telecom report"Integrated Services Digital Network", Band. 8, 1985 Guenter Raab: "Private ISDN Communications Systems and their Interoperation with the Public ISDN ",

## Beschreibung

Die vorliegende Erfindung betrifft ein Kommunikationssystem nach dem Oberbegriff des Patentanspruchs 1.

Für den Kommunikationsdienst "Sprache" existieren Kommunikationsnetze mit Kommunikationssystemen in ihren Knotenpunkten. Ihre Aufgabe besteht im Zustandebringen von Verbindungen zwischen den an die Kommunikationssysteme angeschlossenen Teilnehmern. Dabei kann man öffentliche Kommunikationsnetze von sogenannten lokalen Netzen unterscheiden, die vorwiegend innerhalb von Unternehmen installiert sind. An die in den Knotenpunkten der lokalen Netze gelegenen, oft auch als Nebenstellenanlagen bezeichneten Kommunikationssysteme können bis zu mehreren tausend Teilnehmer angeschlossen werden. Eine Schnittstelle zu den öffentlichen Kommunikationsnetzen erlaubt darüberhinaus die Kommunikation mit externen Partnern.

Solange die Kommunikation auf die Kommunikationsform "Sprache" ausgerichtet ist, reichen analoge Kommunikationsnetze und -systeme für die zugehörigen Grundfunktionen aus. Die heutige Bürokommunikation umfaßt aber weitere Kommunikationsformen, die mit solchen analogen Systemen nicht oder nur unzureichend realisiert werden können. Dabei handelt es sich um die Kommunikationsformen "Bild", "Daten" und "Text", zu deren Übertragung und Verarbeitung digitale Verfahren benutzt werden. In der Praxis entstanden so zuweilen digitale Kommunikationsnetze, die parallel zu den bis dahin existierenden analogen Kommunikationsnetzen erstellt wurden. Dies bedingt zwangsläufig eine gewisse Komplexität und Unübersichtlichkeit bezüglich der Kommunikation mit anderen Teilnehmern, da im allgemeinen einem Teilnehmer für die unterschiedlichen Kommunikationsdienste verschiedene Teilnehmernummern zugeordnet werden. Dies war einer der Gründe dafür, die parallel existierenden Netze in ein einheitliches Kommunikationsnetz zu integrieren.

Die mit diesem Konzept verbundenen Ideen sind mit dem Begriff ISDN (Integrated Service Digital Network) verknüpft. In öffentlichen Kommunikationsnetzen ist die Realisierung dieser Konzepte noch im Umbruch begriffen, während die Integration der Dienste im Büro schon weiter vorangeschritten ist. Aus der Druckschrift "ISDN im Büro", erschienen im Dezember 1985 als Sonderausgabe zu den monatlichen Publikationen 'Telcom Report' und Siemens- Magazin "COM" der Firma Siemens, sind solche digitalen Kommunikationssysteme bekannt, die eine flexible Anpassung an moderne Organisationsformen erlauben. Dies geschieht unter anderem durch eine Integration von sogenannten Servern, d.h. Hardware-Modulen, die mittels Systemprozeduren spezielle Services - Leistungsmerkmale im Kommunikationssystem - bereitstellen. Bei der Übertragung von Bild-, Textdaten, etc. werden diese Server genutzt.

In bestimmten Anwendungsgebieten für Bürokommunikation werden spezielle, nicht allgemein übliche Leistungsmerkmale benötigt; ein solches Anwendungsgebiet ist beispielsweise der internationale Handel mit Aktien, Devisen, Rohstoffen, der nicht nur eine weltweite Kommunikation zur Entscheidungsfindung, sondern auch ein unmittelbares, aktives Eingreifen in das Marktgeschehen notwendig macht. Sonderanlagen für solche Zwecke sind heute als selbständiges System oder als Zweitstellennebenanlage hinter eine analoge Hauptanlage geschaltet.

Die in der oben erwähnten Druckschrift erläuterten digitalen Kommunikationssysteme sind nun nicht speziell für solche Anwendungen konzipiert; so ist beispielsweise für einen Devisenhändler, der in Sekunden auf eine sich verändernde Marktlage reagieren muß, nicht nur das ständige Beobachten des Marktes, sondern auch ein aktives Eingreifen in das Marktgeschehen unerläßlich. Entsprechende Leistungsmerkmale hierzu werden von bekannten digitalen Kommunikationssystemen nur in beschränktem Umfang, von bekannten analogen Kommunikationssystemen nur mit verhältnismäßig hohem Aufwand, z. B. durch eine zusätzliche Zweitnebenstellenanlage zur analogen Hauptanlage, bereitgestellt.

Von besonderer Bedeutung ist dabei oft auch die schnelle Erreichbarkeit eines beliebigen Mitgliedes eines Devisenhändlerteams, so z.B. zur Abwicklung eines Standardauftrages, sowie die Möglichkeit zur Bildung von Konferenzgesprächen.

Weiterhin ist aus Telecom-Report, "Integrated Services Digital Network", Band 8, 1985, Günter Raab: "Private ISDN Communication Systems and Interoperation with the Public ISDN" und aus der deutschen Offenlegungsschrift DE 36 25 854 ein ISDN-Kommunikationssystem bekannt. Mit derart ausgestalteten Kommunikationssystem können mehrere Dienste unter einer Rufnummer zusammengefaßt werden. Für spezielle Anwendungen sind derartige Kommunikationssysteme jedoch nicht konzipiert.

Der Erfindung liegt die Aufgabe zugrunde, eine Bürokommunikation auf digitaler Basis mit der Bereitstellung entsprechender Leistungsmerkmale für spezielle Anwendungen wie z.B. Makleranlagen möglich zu machen.

Diese Aufgabe wird ausgehend vom Oberbegriff des Patentanspruchs 1 erfindungsgemäß durch dessen kennzeichnende Merkmale gelöst. Vorteilhafte Ausgestaltungen der Erfindung sind in weiteren Ansprüchen angegeben.

Als wesentlich für die Erfindung ist die Einführung vermittlungstechnischer Server in die Peripherie eines digitalen Kommunikationssystems anzusehen. Sie werden als Sonderperipheriemodul - im folgenden Servermodul genannt - realisiert, und anstelle eines oder mehrerer üblicher digitaler Schnittstellenmodule an das Kommunikationssystem angeschlossen. Damit steht dem Anwender der volle Leistungsumfang des digitalen Kommunikationssystems verbunden mit den zusätzlichen Leistungsmerkmalen des vermittlungstechnischen Servers zur Verfügung. Insbesondere die Verlagerung des vermittlungstechnischen Servers in die Peripherie des Kommunikationssystems bietet erhebliche Vorteile, wie z. B. die Möglichkeit, bei Bedarf flexibel neue Leistungsmerkmale bereitzustellen, ohne dabei in zentralen Teilen des Kommunikationssystems umfangreiche Eingriffe vornehmen und damit eventuell das gesamte System abschalten zu müssen. Zum anderen ist die Verwendung der vermittlungstechnischen Server anstelle anderer Schnittstellenmodule mit einer drastischen Reduzierung des Verkabelungsaufwandes und damit einer Minimierung der Fehlerwahrscheinlichkeit verbunden.

Durch eine besondere Vernetzung der vorhandenen vermittlungstechnischen Server wird dabei ermöglicht, daß ein externer Anrufer gleichzeitig mehrere Mitglieder des Händlerteams rufen kann (Leistungsmerkmal 'Parallelruf'). Dadurch ergibt sich eine minimale Wartezeit für den Anrufer, bis eines der Teammitglieder auf den Anruf eintritt. Falls z.B. fünf Mitglieder des Händlerteams Warentermingeschäfte abwickeln und ein Kunde einen diesbezüglichen Auftrag rasch-möglichst aufgeben möchte, kann er die den fünf Teammitgliedern zugeordnete Rufnummer wählen und wird mit dem ersten Mitglied verbunden, das auf den Anruf eintritt. Ferner kann auch vorgesehen werden, daß nicht nur ein, sondern mehrere Teammitglieder in ein Konferenzgespräch mit dem Anrufer eintreten können. Zur Realisierung dieses Leistungsmerkmals können die funktionell gleichwirkenden vermittlungstechnischen Server, die je zumindest eine Durchschalteeinheit aufweisen, direkt oder über einen zusätzlichen zentralen vermittlungstechnischen Server miteinander verbunden werden. Die Verwendung eines zentralen vermittlungstechnischen Servers hat dabei den Vorteil, daß die Kapazität der in den vermittlungstechnischen Forum verwendeten Durchschalteeinheiten relativ klein gehalten werden kann.

Im folgenden sei die Erfindung anhand eines figürlich dargestellten Ausführungsbeispiels näher erläutert. Darin ist ein modular strukturiertes Kommunikationssystem KS aufgezeigt, an das herkömmliche Endgeräte DT, AT sowie über Konzentratorbaugruppen DDBC Sonderendgeräte DDB (DIGITAL DEALER BOARD) angeschlossen sind und das ausgehend von einer Schnittstellenbaugruppe SB mit weiteren Kommunikationssystemen ÖAK, ÖDK, NA verbunden ist.

Zentraler Bestandteil des Kommunikationsstems KS ist eine Durchschalteeinheit SWU. In dieser sind alle der Durchschaltung von Verbindungen dienenden zentralen Einheiten sowie eine hierzu erforderliche zentrale Steuerung integriert. Die Durchschalteeinheit SWU ist ferner mit Schnittstelleneinheiten SB, mit Peripheriemodulen SLMB und SLMA, einem Schnittstellenelement STMD sowie einer Anpassungseinheit TRI verbunden. Die Schnittstelleneinheiten SB stellen ausgangsseitig die Verbindung zu anderen Nebenstellenanlagen sowie zu externen Kommunikationssystemen her. Letztere können beispielsweise öffentliche, digital oder analog ausgestaltete Kommunikationssysteme ÖAK, ÖDK sein. Die Verbindung zwischen dem Kommunikationssystem KS und jenen öffentlichen Kommunikationssystemen ÖAK, ÖDK kann dabei über Standleitungen oder Mietleitungen erfolgen. Das Kommunikationssystem KS ist ISDN-systemgerecht in öffentliche Kommunikationsnetze eingebunden; die Schnittstelleneinheiten SB müssen diese Einbindung durch Bereitstellung spezieller Datenformate sicherstellen. Des weiteren ist die Durchschalteeinheit SWU mit integrierten Servern S1...SN über zentrale Bussysteme verbunden. Weiterhin sind an die Durchschalteeinheit SWU die Peripheriemodule SLMA bzw. SLMB angeschaltet, deren Aufgabe in der Bereitstellung der in der Vermittlungstechnik allgemein bekannten BORSCHT-Funktionen für Teilnehmerendgeräte besteht. Während die SLMA Peripheriemodule den Anschluß analoger Teilnehmerendgeräte AT ermöglichen, sind die Peripheriemodule SLMB für den Anschluß digitaler Teilnehmerendgeräte DT konzipiert. Die Schnittstelleneinheit STMD führt Anpassungsmaßnahmen zwischen dem Kommunikationssystem KS und externen Speichereinheiten SM durch.

Die vermittlungstechnischen Server sind als Sonderperipheriemodule SLMT, im folgenden Servermodule genannt, realisiert. Sie werden dezentral in das Kommunikationssystem KS eingebunden, indem sie anstelle der Peripheriemodule SLMB eingefügt werden. Die systemkonforme Einbindung erfordert umfangreiche Anpassungsmaßnahmen an den betreffenden Hardware- und Software-Schnittstellen, worauf später eingegangen wird.

Vorzugsweise werden, bei höherem Aufbaugrad der Händleranlage, die vermittlungstechnischen Server SLMT in Systemgruppen SLMT11,...SLMT44; SLMTZ1...SLMTZ4 geordnet. Vier Einzel-Systemgruppen mit je 4 vermittlungstechnischen Servern wird dabei vorzugsweise eine zentrale Systemgruppe mit vier vermittlungstechnischen Servern zugeordnet.

In einer ersten Ausbauphase, für kleinere Händlerteams, wird nur eine einzelne Systemgruppe mit vier Servermoduln SLMT11...SLMT14 verwendet, die untereinander über Datenwege D und/oder ein zentrales Peripherieservermodul SLMTZ1 verbunden sind. In den nächsten Aufbaustufen können weitere Systemgruppen mit je vier Servermoduln SLMT21...SLMT24; SLMT31...SLMT34; SLMT41...SLMT44, hinzugefügt werden. Diese vier Einzel-Systemgruppen können erfindungsgemäß direkt über zusätzliche Datenwege und/oder über eine zusätzliche, dezentrale Systemgruppe mit Peripherieservermodulen SLMTZ1...SLMTZ4 miteinander vernetzt werden. Jede der vier Einzel-Systemgruppen wird dabei je mit einem der untereinander über Datenwege D verbundenen Peripherieservermodule SLMTZ1...SLMTZ4 der zentralen Systemgruppe über Leitungen Li verbunden. Die maximale Anzahl der Servermodule SLMT pro Einzel-Systemgruppe wird dabei durch die Kapazität der auf den Servermodulen verwendeten Durchschalteeinheiten SWU bestimmt. Von jeder Systemgruppe können beispielsweise bis zu 59 Leitungen (und eine HDLC-Signalisierungsleitung) zur zentralen Systemgrupe verbunden werden. Eine Systemgruppe hat somit Zugriff zu 59 gemeinsamen Leitungen. Die zentrale Systemgruppe verfügt daher über 240 Anschlüsse, wovon vier Anschlüsse für die HDLC-Signalisierung der Einzel-Systemgruppen vorgesehen sind. Die verbleibenden 236 Anschlüsse können dabei beliebig für Verbindungen zu den Einzel-Systemgruppen oder für gemeinsame Leitungen verwendet werden.

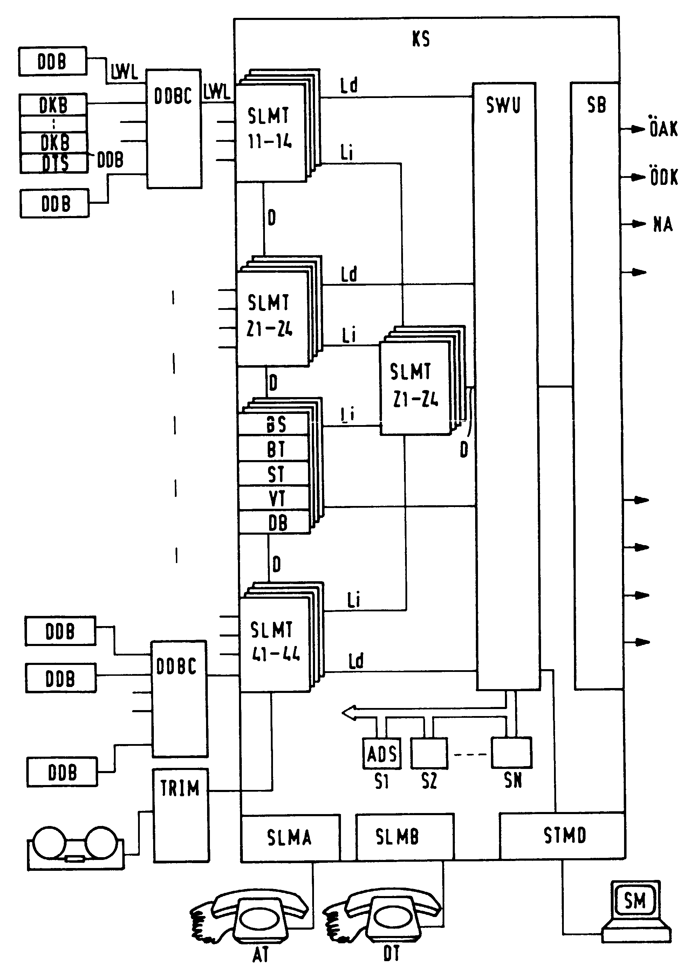

Ausgangsseitig werden die Sonderendgeräte DDB über Konzentratorbaugruppen DDBC an die Servermodule SLMT 11...SLMT44 herangeführt. Dazu wurden die Konzentratorbaugruppen DDBC mit Multiplexeigenschaften ausgestattet, um die von mehreren Teilnehmerendgeräten DDB ankommenden Daten auf eine Verbindungsleitung zu einem der Servermodul SLMT11...SLMT44 zu schalten. Die Anschaltung der Teilnehmerendgeräte DDB an die Konzentratorbaugruppen DDBC sowie deren Verbindung zu den Servermodulen SLMT erfolgt über Lichtwellenleiter LWL. Als Übertragungsverfahren wird ein PCM-Puls Code Modulation)-Verfahren verwendet. Wie aus der Figur 1 ersichtlich, können unterschiedliche Sonderendgeräte DDB - je nach Händlerarbeitsplatz - verwendet werden. Sonderendgeräte DDB können beispielsweise Teilnehmerendgeräte DKB (DEALER KEY BOARD) oder DTS (DEALER TOUCH SCREEN) sein. Das Teilnehmerendgerät DKB ist ein für den Händlerarbeitsplatz konzipiertes, tastenorientiertes Endgerät. Es ist mit optischen Anzeigeelementen, mindestens einem Handapparat sowie einer Vielzahl von Tasten, denen in mehreren Ebenen Funktionen fest sowie frei programmierbar zugewiesen sind, ausgestattet.

Das Teilnehmerendgerät DTS ist ein bildschirmorientiertes Endgerät am Händlerarbeitsplatz, in das neben wenigstens einem Handapparat insbesondere ein graphikfähiger Bildschirm sowie ein entsprechendes Touchmedium integriert ist. Das Ansteuern der Elemente des Teilnehmerendgerätes DKB bzw. DTS erfolgt über das Servermodul SLMT unter Verwendung von Steuerprozeduren BS, BT.

Generell sind die auf dem Servermodul SLMT ablaufenden Prozeduren organisatorisch in entsprechenden Komplexen auf dem Servermodul SLMT abgelegt. Die gesamte Software des vermittlungstechnischen Servers SLMT unterscheidet dabei Prozeduren
- des Betriebssystems BS
- der Betriebstechnik BT
- der Vermittlungstechnik VT
- der Sicherheitstechnik ST sowie
- der Datenbank DB.

Während die Prozeduren des Betriebssystems BS Steueraufgaben durchführen, bearbeiten die Prozeduren der Betriebstechnik BT Steuerungsaufgaben im Bereich
- der Zeitsynchronisierung zu dem Kommunikationssystem KS sowie - der Systemzuverlässigkeit.

Der störungsfreie Betrieb jedes Servermoduls SLMT wird von der Sicherheitstechnik ST sichergestellt. Sie sorgt insbesondere dafür, daß auftretende Fehler sofort analysiert werden und bei Bedarf entsprechende Reaktionen von Seiten des Systems ausgelöst werden.

Die Prozeduren des vermittlungstechnischen Funktionsblocks VT des Servermoduls SLMT bearbeiten die eigentlichen händlertypischen Leistungsmerkmale. Händlertypische Leistungsmerkmale sind zum Beispiel
- Sprachüberwachung
- Makeln und Parallelruf-
- Konferenzgesprächs-
- die Mithör- bzw. Mitschreibfunktionen,
worauf an anderer Stelle noch näher eingegangen wird. Insbesondere führen die Prozeduren des vermittlungstechnischen Funktionsblocks VT des Servermoduls SLMT die Umsetzung der von den Sonderendgeräten DDB ankommenden Datenformate an die Datenformate des Kommunikationssystems KS durch.

Des weiteren ist auf dem Servermodul SLMT eine Datenbank DB abgelegt, in welcher statische und dynamische Konfigurationsdaten der Sonderendgeräte DDB sowie der Servermodule SLMT selbst verwaltet werden. Die statischen Konfigurationsdaten geben Auskunft über die Bestückung der Teilnehmerendgeräte DDB mit Handapparaten und Lautsprecher, während die dynamischen Konfigurationsdaten Informationen über momentane Belegungszustände der Handapparate sowie die Belegungszustände der angeschlossenen Leitungen vermitteln. Über die Datenwege D werden die auf jedem Servermodul SLMT abgelegten Datenbanken DB mit den neuesten Konfigurationsdaten aktualisiert. Somit hat jedes Servermodul SLMT ein vollständiges Abbild der gesamten Konfiguration aller vermittlungstechnischen Server. Eine eventuelle Änderung des Konfigurationszustandes eines der Servermodule SLMT oder des Sonderendgerätes DDB wird umgehend über die Datenwege D den übrigen Servermodulen SLMT mitgeteilt. Mit diesem Konzept ist eine Dezentralisierung statischer sowie dynamischer Konfigurationsdaten verbunden. Dies bedeutet, daß z. B. bei der Erstellung neuer Leistungsmerkmale eventuelle Änderungen ohne großen Aufwand auf den Servermodulen SLMT durchgeführt werden können, ohne dabei zentral in die Prozeduren des Kommunikationssystem KS eingreifen zu müssen.

Ferner sind an das Kommunikationssystem KS über die Schnittstellenelemente STMD externe Speichereinheiten - im folgenden System Manager SM genannt - mit Datensichtgerät angeschlossen. Im System Manager SM ist darüberhinaus eine vom Kommunikationssystem KS unabhängige Spannungsversorgung integriert; generell sind im System Manager SM die Konfigurationsdaten für die Servermodule SLMT und die Teilnehmerendgeräte DDB enthalten. Die Verlagerung der Konfigurationsdaten zu externen Einheiten kommt insbesondere dann zum Tragen, wenn das Kommunikationssystem für Wartungsarbeiten abgeschaltet werden muß. In diesem Fall werden beim 'Hochlauf' des Kommunikationssystems KS die Servermodule SLMT sowie die Teilnehmerendgeräte DDB mit jenen Konfigurationsdaten vom System Manager SM geladen, womit der ursprüngliche Zustand in kurzer Zeit wiederhergestellt ist.

Aus diesem Konzept resultieren Leistungsmerkmale, die den speziellen Bedürfnissen eines Händlerarbeitsplatzes Rechnung tragen. Insbesondere das Leistungsmerkmal 'SPEECH MONITORING' ('Sprachüberwachung'),mit dem mehrere Gespräche auf einen Lautsprecher geschaltet werden können, berücksichtigt die besonderen Bedingungen des Händlerarbeitsplatzes.

Das Leistungsmerkmal "Sprachüberwachung" kann jedoch auch derart vorgesehen sein, daß ein Endgerät oder eine Gruppe von z.B. über einen Konferenzbaustein zusammengefaßter Endgeräte eine Leitung nicht bezüglich eines zweiseitig geführten Gesprächs, sondern bezüglich einer Durchsage überwacht. D.h., an der Vermittlungszentrale angeschlossene Teilnehmer, die zur Aufschaltung an die entsprechenden Durchsageleitungen berechtigt sind, können Durchsagen an eine oder mehrere Gruppen abgeben. Auf den Sonderendgeräten DDB kann zumindest eine Durchsageleitung speziell konfiguriert und z.B. mit einem Knopfdruck anwählbar sein. Dabei wird vorgesehen, daß die angewählte Durchsageleitung, der eine Rufnummer zugeordnet ist, sofort in den Gesprächszustand übergeht. Auf weiteren Sondergeräten DDB wird die Durchsageleitung z.B. derart konfiguriert, daß Durchsagen automatisch über den mit dem Sonderendgerät DDB verbundene Lautsprecher abgegeben werden. Dadurch können Meldungen und wichtige Informationen von zentraler Stelle an verschiedene Zielgruppen abgegeben werden.

So können beispielsweise vier Gespräche von unterschiedlichen Börsenplätzen auf einen Lautsprecher eines der Sonderendgeräte DDB geschaltet werden; an solchen Arbeitsplätzen tätige Personen sind im allgemeinen in der Lage, die für sie relevanten Informationen "herauszuhören".

Ein aktives Eingreifen in das Marktgeschehen muß oft in Sekundenschnelle erfolgen. Langwierige Wählvorgänge zum Aufbauen weltweiter Verbindungen müssen demzufolge unter allen Umständen vermieden werden. Zu diesem Zweck können daher durch Tastendruck am Teilnehmerendgerät DDB Verbindungen zu Zielen aufgebaut werden; weiterhin können über Tastendruck Richtungen vorgegeben und über Nachwahl das entsprechende Ziel erreicht werden. Außerdem dient das Leistungsmerkmal 'MAKELN', mittels dessen bestehende Verbindungen, beispielsweise mit mehreren internationalen Börsenplätzen, am Händlerarbeitsplatz auf 'HALTEN' gelegt werden, dem effizienten Telefonieren. Der Händler ist also an seinem Arbeitsplatz 'potentiell' mit einer Vielzahl von Partnern verbunden. Real mag er eine, zwei oder mehrere Verbindung(en) - je nach dem, wieviel Handapparate pro Gerät vorhanden sind - aktiviert haben und darüber aktiv mit den entsprechenden Partnern kommunizieren. Es besteht jedoch jederzeit die Möglichkeit, ein aktiv geführtes Gespräch in den Zustand 'HALTEN' zu schalten und sich auf ein momentan im Zustand 'HALTEN' befindliches Gespräch aufzuschalten und aktiv mit diesem Partner zu kommunizieren. Diese Umschaltevorgänge werden vom Sonderendgerät DDB aus durch Betätigen der entsprechenden Tasten oder Berühren des entsprechenden Feldes am Bildschirm gesteuert. Die die Steuerungsvorgänge durchführenden Prozeduren werden von den Prozedurkomplexen der Vermittlungstechnik VT des Servermoduls SLMT durchgeführt.

Jeder Kauf/Verkauf von Produkten stellt im juristischen Sinne einen Vertrag zwischen zwei Partnern, im allgemeinen also zwischen Kunde und Händler dar. Ein Devisenhändler, der täglich über Kauf/Verkauf hoher Beträge entscheidet, schließt im Prinzip ständig telefonische Verträge mit wechselnden Partnern, ohne daß eine Möglichkeit, die erfolgten Abschlüsse inhaltlich nachvollziehen zu können, gegeben ist. Eine solche Möglichkeit wird mit den Leistungsmerkmalen 'Mithören/Mitschreiben' geschaffen. Bei der Konzeption der im Rahmen der Erfindung vorgesehenen vermittlungstechnischen Server kann vorgesehen werden, daß weitere Teilnehmer zum Mithören von Gesprächen auf die relevanten Leitungen aufgeschaltet werden. Dies erfolgt an einem der Servermodule SLMT. In Abhängigkeit von den in den Datenbankprozeduren DB abgelegten statischen und dynamischen Konfigurationsdaten schalten die Prozeduren der Vermittlungstechnik VT die entsprechenden "Sprach-Highways' der Durchschalteeinheit SWU auf das für 'Mithörzwecke' zu verwendende Servermodul SLMT durch. Um darüberhinaus die bis dahin mündlich abgeschlossenen Verträge zu einem späteren Zeitpunkt inhaltlich nachvollziehen zu können, wird darüberhinaus an das Servermodul SLMT ein Bandgerät herangeführt. Die Anschaltung erfolgt dabei über eine Anpassungseinheit TRIM, das seinerseits mit dem Servermodul SLMT verbunden ist, und das die erforderliche Anpassungsmaßnahme durchführt.

Wichtig ist natürlich nicht nur die Möglichkeit zur schnellen Kontaktaufnahme des Händlerteams nach außen, z.B. der schnelle Anruf zu einem externen Börsenplatz, sondern insbesondere auch die Möglichkeit zur schnellen Kontaktaufnahme vom Kunden zu Mitgliedern des Händlerteams. Dabei sollen Zeitverluste vermieden werden, die durch mehrmaliges Anrufen verschiedener Teammitglieder entstehen, die momentan nicht anwesend sind. Daher wird dem Kunden die Möglichkeit zur Wahl einer Nummer gegeben, mit der er gleichzeitig mehrere Mitglieder bzw. eine Untergruppe des Händlerteamas rufen kann. Falls diese Untergruppe immer einen günstig gewählten Minimalbestand von anwesenden Mitgliedern aufweist, wird der Kunde jeweils sehr schnell mit dem Händlerteam Kontakt aufnehmen können. Ferner kann es auch notwendig sein, daß verschiedene Teammitglieder in ein Konferenzgespräch mit dem Kunden eintreten können.

Die Durchschaltung eines Kundenanrufes, der z.B. dem Servermodul SLMT11 zugeleitet wird, an mehrere Teammitglieder verschiedener weiterer Systemgruppen kann dabei (ohne Mitwirkung einer zentralen Systemgruppe) durch die Durchschalteeinheit SWU des Servermoduls SLMT11 über direkte Datenleitungen zu den entsprechenden Systemgruppen erfolgen. Es ist jedoch leicht einsehbar, daß mit der steigenden Anzahl zusätzlicher Systemgruppen die Anforderungen an die Kapazität der Durchschalteeinheit SWU jedes Servermoduls SLMT und die Anzahl der vorzusehenden Verbindungen stark ansteigen. Daher wird vorteilhaft eine zentrale Systemgruppe mit den Peripherieservermodulen SLMTZ1...SLMTZ4 eingesetzt. Durch vermittlungstechnische Prozeduren wird nun vorgesehen, daß bei einem der zentralen Systemgruppen zugeleiteten externen Anruf eine gemeinsame Verbindung zu mehreren Systemgruppen erstellt wird. Gleichzeitig erfolgt die Signalisierung auf allen entsprechenden Systemgruppen. Die Sprachüberwachung, das Eintreten weiterer Teilnehmer derselben Systemgruppe in durchgezogene Leitungen und das Vermitteln von Leitungen erfolgt vorzugsweise auf der Einzel-Systemgruppe. Eine gemeinsame Leitung kann von der zentralen Systemgruppe auf verschiedene Einzel-Systemgruppen vermittelt werden. Diese gemeinsamen von der zentralen Systemgruppe erstellten Verbindungen sind in den Einzel-Systemgruppen vorzugsweise auf einem einzigen Servermodul SLMT zu konzentrieren. Jede der Einzel-Systemgruppen erhält von dieser SLMT aus eine HDLC-Signalisierungsstrecke zur zentralen Systemgruppe. Die Signalisierung kann über diese Signalisierungsstrecke dabei je nach Standort des Anrufers von oder zur zentralen Systemgruppe erfolgen. Die akustische Zusammenschaltung mehrerer Systemgruppen in der zentralen Systemgruppe oder einzelner Gesprächsteilnehmer einer Einzel-Systemgruppe erfolgt dabei in Konferenzbausteinen, die in den Servermodulen SLMT vorgesehen sind.

## Patentansprüche

1. Kommunikationssystem (KS), mit
einer der Durchschaltung von Verbindungsleitungen dienenden Durchschalteeinheit (SWU) mit einem Koppelfeld und einer zentralen Steuerung,
mit wenigstens einem Daten und Programme für Leistungsmerkmale bereitstellenden zentralisierten Server (S1...SN ) sowie als Schnittstellen zu Teilnehmerendgeräten fungierenden Peripheriemodulen (SLMA, SLMB),
**dadurch gekennzeichnet**,
daß Sonderendgeräte (DDB) vorgesehen sind, die einerseits Betätigungsmittel und optischen Anzeigemittel und andererseits Lautsprecher und Handapparate, die in ihrer Anzahl größer als 2 sind,aufweisen und die an Sonderperipheriemodule (SLMT) angeschlossen sind, in denen die die Sonderendgeräte (DDB) steuernden Prozeduren (BS, BT), vermittlungstechnische Prozeduren (VT) und Datenbankprozeduren (DB) ablaufen.

2. Kommunikationssystem nach Anspruch 1,
**dadurch gekennzeichnet**,
daß die Steuerprozeduren (BS, BT) die Steuerung der Betätigungsmittel und optischen Anzeigemittel durchführen, und Daten in einer Übertragungsprozedur von den Sonderendgeräten (DDB) sowie den Sonderperipheriemodulen (SLMT) über ein Schnittstellenelement (STMD) zu einem externen Speichermedium (SM) übertragen.

3. Kommunikationssystem nach Anspruch 1,
**dadurch gekennzeichnet**,
daß vermittlungstechnische Prozeduren (VT) die Übertragungsformate spezieller Informationsdaten der Sonderendgeräte (DDB) in kommunikationssystemspezifische Formate umsetzen und darüberhinaus Basisfunktionen der Vermittlungstechnik als Grundbausteine weiterer Leistungsmerkmale bereitstellen.

4. Kommunikationssystem nach Anspruch 1 bis 4,
**dadurch gekennzeichnet**,
daß Datenbankprozeduren (DB) Informationen über die Sonderendgeräte (DDB) und die Sonderperipheriemodule (SLMT) und Benutzung der Datenwege (D) allen Sonderperipheriemodulen (SLMT) mitteilen.

5. Kommunikationssystem nach Anspruch 1,
**dadurch gekennzeichnet**,
daß die Sonderendgeräte (DDB) über Konzentratorbaugruppen (DDBC) an die Sonderperipheriemodule (SLMT) angeschlossen sind.

6. Kommunikationssystem nach Anspruch 1 bis 5,
**dadurch gekennzeichnet**,
daß die Sonderendgeräte (DDB) mit Sende- und Empfangseinrichtungen für mehrere Nutzkanäle ausgerüstet sind und eine Zuordnung zwischen einem Nutzkanal und einem Akustikelement über Tastenbetätigung beeinflußbar ist.

7. Kommunikationssystem nach einem der Ansprüche 1 bis 6,
**dadurch gekennzeichnet**,
daß weitere Teilnehmerendgeräte (AT, DT) auf wenigstens eins der Sonderperipheriemodule (SLMT) im Sinne eines passiven Mithörens aufgeschaltet sind.

8. Kommunikationssystem nach einem der Ansprüche 1 bis 7,
**dadurch gekennzeichnet**,
daß ein weiteres der Aufzeichnung von Gesprächen dienendes externes Speichermedium über eine Anpassungseinheit (TRIM) an wenigstens eines der Sonderperipheriemodule (SLMT) anschließbar ist.

9. Kommunikationssystem nach einem der Ansprüche 1 bis 8, **dadurch gekennzeichnet**,
daß die Sonderperipheriemodule (SLMT) über mindestens ein zusätzliches zentrales Peripherieservermodul (SLMTZ₁...SLMT_{N}) an die Duchschalteeinheit (SWU) herangeführt werden.

10. Kommunikationssystem nach Anspruch 1 bis 9,
**dadurch gekennzeichnet**,
daß die Sonderperipheriemodule (SLMT) in Systemgruppen (SLMT11...SLMT44; SLMTZ₁...SLMTZ_{N}) unterteilt sind, wobei die Sonderperipheriemodule (SLMT11...SLMT14;...;SLMT41...SLMT44; SLMTZ₁....SLMTZ_{N}) untereinander über Datenwege (D) verbunden sind.

11. Kommunikationssystem nach Anspruch 1 bis 10,
**dadurch gekennzeichnet**,
daß gleichzeitig mehrere mit den Sonderperipheriemodulen (SLMT) verbundene Sonderendgeräte (DDB) über mindestens ein zentrales Peripherieservermodul (SLMTZ_{N}) anwählbar sind.

12. Kommunikationssystem nach Anspruch 1 bis 11,
**dadurch gekennzeichnet**,
daß in den Sonderperipheriemodulen (SLMT) Konferenzbausteine derart vorgesehen sind, daß über mindestens zwei der angewählten Sonderendgeräte (DDB) auf einen Anruf eingetreten werden kann.

13. Kommunikationssystem nach einem der vorhergehenden Ansprüche,
**dadurch gekennzeichnet**,
daß einzelne oder in Gruppen zusammengefaßte Sonderendgeräte (DDB) zur Sprachüberwachung einer Leitung konfiguriert sind, die durch berechtigte Teilnehmer zum Absetzen einer Durchsage belegbar ist und die sofort nach der Wahl der entsprechenden Rufnummer zur Abgabe der Durchsage freigegeben wird.

## Claims

1. Communication system (KS) having
a switching unit (SWU) which serves to switch through connection lines and has a switching network and a central controller,
having at least one centralized server (S1...SN) providing data and programs for features, and also peripheral modules (SLMA, SLMB) acting as interfaces to subscriber terminals,
characterized in that special terminals (DDB) are provided which on the one hand have actuating means and optical display means and on the other hand have loudspeakers and handsets, of which there are more than 2., and which are connected to special peripheral modules (SLMT) in which the procedures (BS, BT) controlling the special terminals (DDB), call processing procedures (VT) and data bank procedures (DB) are executed.

2. Communication system according to Claim 1, characterized in that the control procedures (BS, BT) perform the control of the actuating means and optical display means, and transmit data in a transmission procedure from the special terminals (DDB) as well as the special peripheral modules (SLMT) to an external storage medium (SM) via an interface element (STMD).

3. Communication system according to Claim 1, characterized in that call processing procedures (VT) convert the transmission formats of special information data of the special terminals (DDB) into communication-system specific formats, and in addition provide basic switching functions as the foundations for further features.

4. Communication system according to Claims 1 to 4, characterized in that data bank procedures (DB) notify all special peripheral modules (SLMT) of information about the special terminals (DDB) and the special peripheral modules (SLMT) and utilization of the data paths (D).

5. Communication system according to Claim 1, characterized in that the special terminals (DDB) are connected to the special peripheral modules (SLMT) via concentrator modules (DDBC).

6. Communication system according to Claims 1 to 5, characterized in that the special terminals (DDB) are equipped with sending and receiving devices for a plurality of information channels, and an assignment between an information channel and an acoustic element can be influenced by means of key actuation.

7. Communication system according to one of Claims 1 to 6, characterized in that further subscriber terminals (AT, DT) are connected through to at least one of the special peripheral modules (SLMT) for the purpose of a passive monitoring.

8. Communication system according to one of Claims 1 to 7, characterized in that a further external storage medium serving to record calls can be connected to at least one of the special peripheral modules (SLMT) via a matching unit (TRIM).

9. Communication system according to one of Claims 1 to 8, characterized in that the special peripheral modules (SLMT) are attached to the switching unit (SWU) via at least one additional central peripheral server module (SLMTZ₁...SLMT_{N}).

10. Communication system according to Claims 1 to 9, characterized in that the special peripheral modules (SLMT) are divided into system groups (SLMT11...SLMT44; SLMTZ₁...SLMTZ_{N}), the special peripheral modules (SLMT11...SLMT14;...;SLMT41...SLMT44; SLMTZ₁...SLMTZ_{N}) being connected to one another via data paths (D).

11. Communication system according to Claims 1 to 10, characterized in that special terminals (DDB) connected simultaneously to the special peripheral modules (SLMT) can be dialled via at least one central peripheral server module (SLMTZ_{N}).

12. Communication system according to Claims 1 to 11, characterized in that conference modules are provided in the special peripheral modules (SLMT) in such a way that it is possible to respond to a call via at least two of the dialled special terminals (DDB).

13. Communication system according to one of the preceding claims, characterized in that individual special terminals (DDB) or ones combined in groups are configured for speech monitoring of a line, which can be seized by authorized subscribers to output an announcement and which is released immediately for output of the announcement after the respective telephone number has been dialled.

## Revendications

1. Système (KS) de communication, comportant une unité (SWU) d'intercommunication qui sert à l'interconnexion de lignes de liaison et qui a un réseau de connexion et une commande centrale, comportant au moins un serveur (S1 à SN) centralisé, qui met à disposition des données et des programmes pour des facilités offertes aux usagers, ainsi que des modules (SLMA, SLMB) périphériques qui font fonction d'interface avec des terminaux d'abonnés, caractérisé en ce qu'il est prévu des terminaux (DDB) spécialisés, qui comportent d'une part des moyens d'actionnement et des moyens optiques d'indication et d'autre part des haut-parleurs et des combinés, dont le nombre est supérieur à deux, et qui sont raccordés à des modules (SLMT) périphériques spéciaux, dans lesquels se déroulent les procédures (BS, BT) commandant les terminaux (DDB) spécialisés, des procédures (VT) de la technique de commutation et des procédures (DB) de banque de données.

2. Système de communication suivant la revendication 1, caractérisé en ce que les procédures (BS, BT) de commande exécutent la commande des moyens d'actionnement et des moyens optiques d'indication et transmettent, suivant une procédure de transmission, par l'intermédiaire d'un élément (STMD) d'interface, des données des terminaux (DDB) spécialisés ainsi que des modules (SLMT) périphériques spéciaux à un moyen (SM) de mémorisation externe.

3. Système de communication suivant la revendication 1, caractérisé en ce que des procédures (VT) de la technique de commutation convertissent les formats de transmission de données spécialisées d'information des terminaux (DDB) spécialisés en formats spécifiques au système de communication et mettent à disposition de plus des fonctions de base de la technique de commutation sous forme de modules de base de facilités offertes aux usagers supplémentaires.

4. Système de communication suivant la revendication 1 à 4, caractérisé en ce que des procédures (DB) de banque de données communiquent à tous les modules (SLMT) périphériques spéciaux des informations sur les terminaux (DDB) spécialisés et les modules (SLMT) périphériques spéciaux et sur l'utilisation des voies (D) de transmission de données.

5. Système de communication suivant la revendication 1, caractérisé en ce que les terminaux (DDB) spécialisés sont raccordés aux modules (SLMT) périphériques spéciaux par l'intermédiaires de modules (DDBC) concentrateurs.

6. Système de communication suivant la revendication 1 à 5, caractérisé en ce que les terminaux (DDB) spécialisés sont munis de dispositifs d'émission et de dispositifs de réception pour plusieurs canaux utiles, et en ce qu'une association entre un canal utile et un élément acoustique peut être influencée en appuyant sur une touche.

7. Système de communication suivant l'une des revendications 1 à 6, caractérisé en ce que des terminaux (DDB) spécialisés supplémentaires sont raccordés à au moins l'un des modules (SLMT) périphériques spéciaux en vue d'une écoute passive.

8. Système de communication suivant l'une des revendications 1 à 7, caractérisé en ce qu'un moyen de mémorisation externe supplémentaire, servant à l'enregistrement de conversations, peut être raccordé à au moins un des modules (SLMT) périphériques spéciaux par l'intermédiaire d'une unité (TRIM) d'adaptation.

9. Système de communication suivant l'une des revendications 1 à 8, caractérisé en ce que les modules (SLMT) périphériques spéciaux sont raccordés à l'unité (SWU) d'intercommunication par l'intermédiaire d'au moins un module (SLMTZ₁...SLMTZ_{N}) serveur périphérique central supplémentaire.

10. Système de communication suivant la revendication 1 à 9, caractérisé en ce que les modules (SLMT) périphériques spéciaux sont subdivisés en groupes (SLMT11 à SLMT44; SLMTZ₁ à SLMTZ_{N}) du système, les modules (SLMT11 à SLMT14;...; SLMT41 à SLMT44; SLMTZ₁ à SLMTZ_{N}) périphériques spéciaux étant reliés les uns aux autres par l'intermédiaire de voies (D) de transmission de données.

11. Système de communication suivant la revendication 1 à 10, caractérisé en ce que l'on peut sélectionner en même temps, par l'intermédiaire d'au moins un module (SLMTZ_{N}) serveur périphérique central, plusieurs terminaux (DDB) spécialisés reliés aux modules (SLMT) périphériques spéciaux.

12. Système de communication suivant la revendication 1 à 11, caractérisé en ce qu'il est prévu dans les modules (SLMT) périphériques spéciaux des modules de conférence, de manière à pouvoir répondre à un appel par l'intermédiaire d'au moins deux des terminaux (DDB) spécialisés sélectionnés.

13. Système de communication suivant l'une des revendications précédentes, caractérisé en ce que des terminaux (DDB) spécialisés individuels ou réunis en groupes sont configurés pour la surveillance vocale d'une ligne qui peut être occupée par des abonnés autorisés pour transmettre une annonce parlée et qui est dégagée immédiatement après que le numéro d'appel correspondant a été composé pour fournir l'annonce parlée.
